# EUROPEAN PATENT APPLICATION

(11) **EP 4 768 349 A1**
(43) Date of publication of application: **01.07.2026**
(21) Application number: 25226404.9
(22) Date of filing: 22.12.2025
(51) Int. Cl.: B60R 22/40, B60R 22/46

(54) **SEATBELT RETRACTOR AND SEATBELT ASSEMBLY**

(30) Priority: 26.12.2024 CN 202411945851
(71) Applicant: Yanfeng International Automotive Technology Co., Ltd., Shanghai 201306 (CN)
(72) Inventor: ZHAO, Wei, Shanghai, 201306 (CN); LIU, Minghao, Shanghai, 201306 (CN); HUANG, Laiguo, Shanghai, 201306 (CN); SHAO, Jian, Shanghai, 201306 (CN)
(74) Representative: Patrade A/S

(57) **Abstract**

The present disclosure relates to a seatbelt retractor for installation in a seat, the seatbelt retractor comprising an adaptive vehicle sensing device and a vehicle sensing adaptive suppression device, wherein the vehicle sensing adaptive suppression device includes a suppression component having a stopping portion, and the adaptive vehicle sensing device has a corresponding stopping portion cooperating with the stopping portion, wherein the seatbelt retractor further includes an engagement control device, wherein when the engagement control device receives an activation signal, the engagement control device is activated and applies a driving force to the suppression component to prevent the stopping portion of the suppression component from engaging with the corresponding stopping portion of the adaptive vehicle sensing device; wherein when the engagement control device receives a deactivation signal, the engagement control device is deactivated and cancels the driving force applied to the suppression component to prompt the suppression component not to move. The present disclosure also relates to a seatbelt assembly.

## Description

### Technical Field

The present disclosure relates to the technical field of seatbelt assemblies, and more particularly to a seatbelt retractor and a seatbelt assembly.

### Background of Invention

With the rapid development of the automotive industry, people's requirements for vehicle safety and comfort are constantly increasing.

Some known seatbelt retractors are equipped with a locking device for locking the webbing spool of the seatbelt retractor in the event of a vehicle emergency, so that the occupant can be better protected. In addition, some seatbelt retractors are equipped with a vehicle sensing device for triggering the locking function of the locking device in the event of a vehicle emergency. Various forms of vehicle sensing devices are known in practice, which are used in particular to sense vehicle acceleration/deceleration and/or vehicle tilt angle and/or other parameters that can reflect the emergency operating state of the vehicle. For example, when the angle between the plane where the vehicle sensing assembly of the seatbelt retractor is located and the horizontal plane reaches or exceeds a predetermined threshold, the vehicle sensing device can trigger the locking function of the locking device to lock the webbing spool. In addition, in some seatbelt retractors mounted on the backrest of automobile seats, as the adjustable angle range of the automobile seat backrest continues to increase, such retractors equipped with vehicle sensing assembly that only has fixed-angle locking can no longer meet the requirements. Therefore, it has become inevitable to select gravity-adaptive adjustable vehicle sensing assembly. Currently, the mainstream gravity-adaptive adjustable vehicle sensing assembly on the market are mechanical, which can always maintain a vertically downward state during the adjustment of the seat backrest.

For seatbelt retractors equipped with gravity-adaptive adjustable vehicle sensing assembly, when there is a coupling or interlocking relationship between the movement of the webbing and the movement of the suppression device for the gravity-adaptive adjustable vehicle sensing assembly, when the seat is adjusted backward, the backrest angle changes, the webbing will be continuously pulled out, actuating the webbing spool to rotate. This will also lead to false triggering of the locking function of the retractor. Specifically, when the webbing is pulled out, the webbing spool will actuate the suppression component of the suppression device to rotate toward the gravity-adaptive adjustable vehicle sensing assembly. After rotating a certain angle, the stopping portion of the suppression component engages with the corresponding stopping portion of the gravity-adaptive adjustable vehicle sensing assembly, and the gravity-adaptive adjustable vehicle sensing assembly is suppressed and cannot continue to maintain a vertically downward state during the backward adjustment of the seat backrest. At this time, the gravity-adaptive adjustable vehicle sensing assembly cannot be adaptively adjusted. As the subsequent backrest adjustment angle reaches or exceeds the predetermined tilt angle threshold of the vehicle sensing assembly, the retractor will trigger the locking function, resulting in the webbing being unable to be pulled out, which in turn becomes tighter and tighter, pressing the occupant's chest and abdomen, and making it difficult to unlock the buckle.

### Summary of Invention

An object of the present disclosure is to provide a seatbelt retractor that can ensure that the adaptive vehicle sensing device is not locked during seat adjustment, and at the same time, the adaptive vehicle sensing device will not be locked at a random position or misaligned and locked when the seat adjustment is completed.

Another object of the present disclosure is to provide a seatbelt assembly.

A first aspect of the present disclosure relates to a seatbelt retractor for installation in a seat, the seatbelt retractor comprising an adaptive vehicle sensing device actuated by its own gravity and a vehicle sensing adaptive suppression device for suppressing the adaptive vehicle sensing device, wherein the vehicle sensing adaptive suppression device includes a suppression component having a stopping portion, and the adaptive vehicle sensing device has a corresponding stopping portion cooperating with the stopping portion, the stopping portion being capable of being combined with the corresponding stopping portion to lock the adaptive vehicle sensing device, characterized in that the seatbelt retractor further includes an engagement control device for controlling the engagement state between the vehicle sensing adaptive suppression device and the adaptive vehicle sensing device, wherein when the engagement control device receives an activation signal, the engagement control device is activated and applies a driving force to the suppression component of the vehicle sensing adaptive suppression device to prevent the stopping portion of the suppression component from engaging with the corresponding stopping portion of the adaptive vehicle sensing device, thereby preventing the adaptive vehicle sensing device from being locked; wherein when the engagement control device receives a deactivation signal, the engagement control device is deactivated and cancels the driving force applied to the suppression component of the adaptive vehicle sensing device to prompt the suppression component not to move.

Compared with the prior art, the present invention can realize the control of the engagement state between the adaptive vehicle sensing device and the vehicle sensing adaptive suppression device. On the one hand, it can solve the problem of false locking of the adaptive vehicle sensing device and the resulting false locking of the seatbelt retractor when the seat is adjusted backward, for example. On the other hand, it can prevent the suppression component from moving when the seat adjustment is completed, for example, so that the suppression component can engage with the adaptive vehicle sensing device as the webbing is pulled out, ensuring that the acceleration and tilt angle locking performance of the seatbelt retractor equipped with the gravity-adaptive vehicle sensing device meets regulatory or relevant standard requirements.

Here, the activation signal for the engagement control device may be continuously or intermittently generated during seat adjustment, for example, and the deactivation signal for the engagement control device may be generated when the seat adjustment is completed. For example, the entire vehicle or the seat controller can send an electrical signal for seat adjustment, such as a voltage or current signal. The activation signal and the deactivation signal may be electrical signals received by the engagement control device, such as voltage or current signals. When the seat starts to be adjusted, for example, the electrical signal rises from zero to a certain value to generate an activation signal, and this value can be maintained during the seat adjustment to continuously generate the activation signal, so that the engagement control device is continuously activated. Of course, the electrical signal may also exist intermittently during the seat adjustment to generate the activation signal intermittently. When the seat adjustment stops, for example, the electrical signal drops from the above value to zero, and this change is manifested as a deactivation signal to deactivate the engagement control device. Of course, the activation signal and the deactivation signal may also be other forms of signals.

The generation or triggering of the activation signal and the deactivation signal may be caused by various forms. For example, in the case of an electric seat, when the occupant operates a seat adjustment button to adjust the seat, an activation signal is generated, and when the occupant ends the operation, a deactivation signal is generated. The seat adjustment button may be a physical button or a virtual button in a central control screen or a display screen on a mobile terminal connected to the vehicle control system, for example. For another example, when the electric seat has a one-key recline function, if the occupant presses the one-key recline button and the one-key recline program runs automatically, the start of the one-key recline program will cause an activation signal to be generated, and a deactivation signal will be generated when the one-key recline program ends.

As mentioned above, the generation of both the activation signal and the deactivation signal can be related to seat adjustment. When the seatbelt retractor is installed in the seat, it is usually installed in the seat backrest. Here, seat adjustment can be understood as any seat adjustment that causes a change in the angle of the seat backrest. In addition, seat adjustment can also be understood as a change in the position of the seatbelt retractor relative to the vehicle body.

In some embodiments, the seatbelt retractor includes a webbing spool, the webbing spool being capable of directly or indirectly actuating the suppression component to move, the suppression component being capable of moving between a stopping position and a blocking position, in the stopping position, the stopping portion of the suppression component being engaged with the corresponding stopping portion of the adaptive vehicle sensing device, while in the blocking position, the stopping portion of the suppression component being disengaged from the corresponding stopping portion of the adaptive vehicle sensing device and the suppression component being blocked, the suppression component being kinematically coupled with the webbing spool such that when the webbing spool rotates in the winding direction, the suppression component can move in a first direction when it has not entered the blocking position, and when the webbing spool rotates in the unwinding direction, the suppression component can move in a second direction opposite to the first direction when it has not entered the stopping position, wherein the engagement control device is configured to, when receiving the activation signal, move the suppression component in the first direction when the suppression component has not entered the blocking position, or keep the suppression component in the blocking position when the suppression component is in the blocking position. For example, when the seat is adjusted, especially when the seat backrest is adjusted backward, the webbing will be pulled out. Due to the provision of the engagement control device of the present disclosure, when the engagement control device receives an activation signal, the engagement control device will move the suppression component in the first direction when the suppression component has not entered the blocking position, or keep the suppression component in the blocking position when the suppression component is in the blocking position. Therefore, even if the webbing is pulled out, the suppression component will not move toward the adaptive vehicle sensing device in the second direction, but will move away from the adaptive vehicle sensing device in the first direction or remain in the blocking position, thereby ensuring that the adaptive vehicle sensing device is not locked and further ensuring that the retractor is not falsely locked. This solves the problem of false locking of the retractor caused by false locking of the adaptive vehicle sensing device, and allows the webbing to be freely pulled out when the seat is adjusted, especially when the seat backrest is adjusted backward, thereby solving the problem of the webbing pressing the occupant's chest.

Here, "The webbing spool being capable of directly or indirectly actuating the suppression component to move" means that the webbing spool can directly actuate the suppression component to move by itself, or can indirectly actuate the suppression component to move through another component, such as an additional actuating component. "The suppression component being kinematically coupled with the webbing spool" means that when the webbing spool directly actuates the suppression component, the rotation of the webbing spool will actuate the suppression component to rotate together; when the webbing spool indirectly actuates the suppression component, that is, when there is an actuating component between the webbing spool and the suppression component, the webbing spool can be directly connected to the actuating component, so that the rotation of the webbing spool will also actuate the suppression component to rotate together, or the webbing spool can be indirectly connected to the actuating component via a transmission mechanism. When the webbing spool is indirectly connected to the actuating component via a transmission mechanism, the actuating component can be arranged coaxially with the webbing spool or non-coaxially with the webbing spool. In addition, due to the existence of the transmission mechanism, the rotational movement of the webbing spool can be converted into the rotational movement, linear movement or other forms of movement of the actuating component according to the structure of the transmission mechanism. At this time, the actuating component will actuate the suppression component to perform corresponding rotational movement or linear movement or other forms of movement.

In some embodiments, the suppression component can be actuated by the webbing spool via adhesive force, wherein the engagement control device is configured such that the engagement control device applies a driving force to the suppression component, which enables the suppression component to overcome the adhesive force and move in the first direction when the suppression component has not entered the blocking position. Thus, the magnitude of the driving force of the engagement control device can be conveniently set, and the driving force can be selected to be greater than the adhesive force applied on the suppression component.

Here, the adhesive force can be achieved by frictional force acting on the suppression component. When the webbing spool directly actuates the suppression component to move, the adhesive force can be the frictional force between the webbing spool and the suppression component, while when the webbing spool indirectly actuates the suppression component to move, for example, via the actuating component, the adhesive force can be the frictional force between the actuating component and the suppression component. In addition to frictional force, adhesive force can also be other forms of force. The characteristic of this adhesive force is that when an external force is applied to the suppression component, if the external force is less than a critical value for the adhesive force, the suppression component remains stationary relative to the webbing spool, and when the external force increases beyond the critical value for the adhesive force, the suppression component moves relative to the webbing spool.

In one embodiment, when the engagement control device is deactivated upon receiving the deactivation signal, the suppression component does not move based on the adhesive force. Thus, based on the adhesive force acting on the suppression component, even when the engagement control device is deactivated upon receiving the deactivation signal, the suppression component will not perform a reset movement as in the prior art, especially reset to engage with the engagement control device. Therefore, in the present disclosure, the engagement control device also uses the adhesive force that can be used by the webbing spool to actuate the suppression component to keep the suppression component stationary when the engagement control device is deactivated, realizing the full utilization of the adhesive force.

In some embodiments, the engagement control device includes a driving member and a driven member, the driving member being capable of driving the driven member to perform relative movement, wherein the driving member is fixedly connected to the suppression component and the driven member is fixedly connected to a fixed and immovable stationary part of the seatbelt retractor, or the driving member is fixedly connected to a fixed and immovable stationary part of the seatbelt retractor and the driven member is fixedly connected to the suppression component. Thus, the arrangement position or fixed position of the driving member and the driven member of the engagement control device can be flexibly set according to actual needs. Here, the fixed and immovable stationary part refers to a part that is fixed and immovable within the seatbelt retractor system.

In some embodiments, the engagement control device is configured as an electromagnetic drive device including a current receiving member as a driving member and a magnet as a driven member, the current receiving member being used to receive an input current, the magnet being used to provide a magnetic field, wherein the current receiving member and the magnet are arranged relative to each other such that the current receiving member that receives the input current interacts with the magnetic field of the magnet, thereby generating the required driving force. By using an electromagnetic drive device with a current receiving member and a magnet as the engagement control device, the advantage of non-contact between the current receiving member and the magnet can be utilized to achieve a particularly flexible arrangement of the current receiving member and the magnet. In addition, thus the magnitude and direction of the driving force can be accurately set as needed by adjusting parameters such as the magnitude of the current flowing through the current receiving member, the resistance of the current receiving member, the distance between the current receiving member and the magnet, and the magnet characteristics of the magnet itself.

In some embodiments, the shape of the current receiving member, the current direction of the input current, and the magnetic poles of the magnet are configured to generate the required driving force. By appropriately configuring the shape of the current receiving member, the current direction of the input current, and the magnetic poles of the magnet, the required driving force can be obtained in an advantageous manner.

In some embodiments, a recessed first accommodating portion for arranging the current receiving member is provided in the fixed and immovable stationary part of the seatbelt retractor, wherein the current receiving member is arranged in the first accommodating portion; wherein the shape of the first accommodating portion is designed such that the current receiving member can be arranged in the first accommodating portion in a shape-matching manner. This allows the current receiving member to be stably arranged in the first accommodating portion of the stationary part without easily shifting in position or direction due to possible vibrations.

In some embodiments, the current receiving member is configured to be flat. Thus, the current receiving member can be arranged in a space-saving manner, thereby making the arrangement structure of the current receiving member compact.

In some embodiments, the current receiving member is provided with at least two wire segments spaced apart from each other by a constant distance, the at least two wire segments spaced apart from each other by a constant distance being arranged relative to the magnet when not energized such that the magnetic induction lines of the magnet pass through a first wire segment of the wire segments in a first magnetic induction line direction and pass through a second wire segment parallel to and opposite to the first wire segment in a second magnetic induction line direction opposite to the first magnetic induction line direction, so that the first wire segment and the second wire segment of the coil respectively generate Ampere forces directed in the same direction when energized, and the resultant force of the corresponding Ampere forces can form the corresponding required driving force according to the fixed position of the coil. When the current receiving member is arranged on the fixed and immovable stationary part of the seatbelt retractor, the reaction force of the Ampere force constitutes the driving force. Conversely, when the current receiving member is arranged on the movable suppression component, the Ampere force itself constitutes the driving force. Thus, the desired driving force can be obtained with limited materials and arrangement space.

In some embodiments, at least two wire segments spaced apart from each other by a constant distance are configured to be linear or arc-shaped. When the wire segments are configured to be linear, the wire segments spaced apart from each other by a constant distance are parallel to each other.

In some embodiments, the current receiving member is configured as a coil. This enables an advantageous configuration and arrangement of the current receiving member.

In some embodiments, a bracket is provided in the coil, the bracket being configured to stretch the coil to obtain the desired coil shape. This allows the shape of the coil to remain stable.

In some embodiments, the shape of the coil is rectangular, trapezoidal, or fan-shaped. Thus, the desired driving force can be obtained with limited materials and arrangement space.

In some embodiments, the fixed and immovable stationary part of the seatbelt retractor is configured as a mechanical side cover. Since the adaptive vehicle sensing device is usually arranged in the axial end region of the webbing spool close to the mechanical side cover, and the vehicle sensing adaptive suppression device can be assembled on the mechanical side cover, using the mechanical side cover as the fixed and immovable stationary part for arranging one of the driving member and the driven member of the engagement control device can realize an advantageous arrangement and fixation of the driving member, such as a current receiving member, especially a coil, or the driven member, such as a magnet, for example, an advantageous small distance between the current receiving member and the magnet can be realized. In addition, there are many available installation spaces for design on the mechanical side cover.

In some embodiments, the suppression component is provided with an arc-shaped head arranged coaxially with the webbing spool, the magnet being arranged at the arc-shaped head, wherein the magnet is configured to be arc-shaped. This achieves an advantageous arrangement and shape of the magnet.

In some embodiments, an arc-shaped second accommodating portion for accommodating the arc-shaped magnet is provided in the arc-shaped head of the suppression component, wherein the second accommodating portion is provided on the side of the arc-shaped head facing the stationary part. This achieves an advantageous accommodation of the magnet. When the second accommodating portion is provided on the side of the arc-shaped head facing the stationary part, such as the mechanical side cover, an advantageous arrangement of the magnet can be realized.

In some embodiments, the engagement control device is configured to receive the activation signal when the seat is adjusted and the deactivation signal when the seat adjustment is completed.

A second aspect of the present disclosure relates to a seatbelt assembly including a webbing and the seatbelt retractor according to any one of the embodiments of the present disclosure, wherein the webbing can be retracted onto the webbing spool of the seatbelt retractor.

The technical features mentioned above, the technical features to be mentioned below, and the technical features shown individually in the accompanying drawings can be arbitrarily combined with each other, provided that the combined technical features are not contradictory to each other. All feasible combinations of features are the technical content explicitly described herein. Any sub-feature among multiple sub-features included in the same sentence can be applied independently, not necessarily together with other sub-features.

### Brief Description of Drawings

The present disclosure is further described below with reference to schematic drawings by means of exemplary embodiments. Here:
Fig. 1 shows a schematic perspective view of a seatbelt retractor according to an embodiment of the present disclosure, wherein the mechanical side cover and the engagement control device are not shown.
Fig. 2 shows a schematic perspective view of a seatbelt retractor according to an embodiment of the present disclosure.
Fig. 3 shows a schematic exploded view of a seatbelt retractor according to an embodiment of the present disclosure.
Fig. 4 shows another schematic exploded view of a seatbelt retractor according to an embodiment of the present disclosure.
Fig. 5a shows a schematic side view of the vehicle sensing adaptive suppression device and the adaptive vehicle sensing device viewed from the webbing spool toward the mechanical side cover.
Fig. 5b shows a schematic side view of the mechanical side cover with the coil of the electromagnetic drive device viewed from the outside toward the mechanical side cover.
Fig. 6a shows a schematic diagram of the current direction of the energized coil of the electromagnetic drive device of the seatbelt retractor according to an embodiment of the present disclosure.
Fig. 6b shows a schematic diagram of the magnetic field direction of the magnet of the electromagnetic drive device of the seatbelt retractor according to an embodiment of the present disclosure.
Fig. 6c shows a schematic diagram of the interaction principle between the energized coil and the magnet's magnetic field of the electromagnetic drive device of the seatbelt retractor according to an embodiment of the present disclosure, as well as the movement of the swing pawl.
Fig. 6d shows a schematic structural diagram of the coil with a bracket of the seatbelt retractor according to an embodiment of the present disclosure.
Fig. 7 shows a workflow diagram of the electromagnetic drive device of the seatbelt retractor according to an embodiment of the present disclosure.

### Detailed Description of Drawings

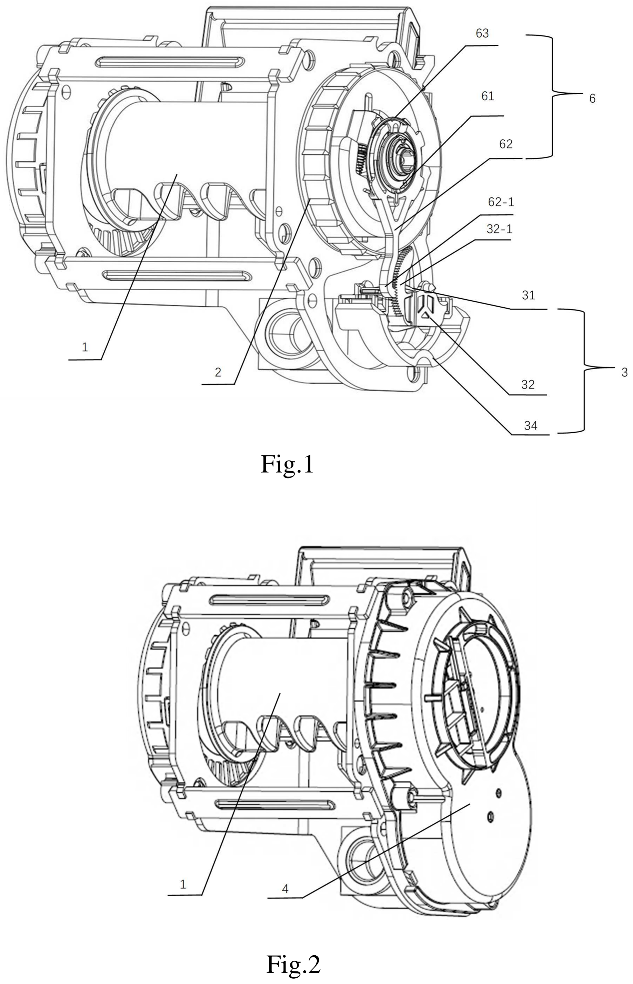

First, a seatbelt retractor according to an embodiment of the present disclosure is described with reference to Figs. 1 to 5b.

As can be seen from Figs. 1 to 4, the seatbelt retractor according to this embodiment includes a webbing spool 1, a webbing sensing device 2, an adaptive vehicle sensing device 3 actuated by its own gravity, a vehicle sensing adaptive suppression device 6 for suppressing the adaptive vehicle sensing device, a locking pawl 8 for locking the webbing sensing device 2, and an engagement control device 7 for controlling the engagement state between the vehicle sensing adaptive suppression device 6 and the adaptive vehicle sensing device 3.

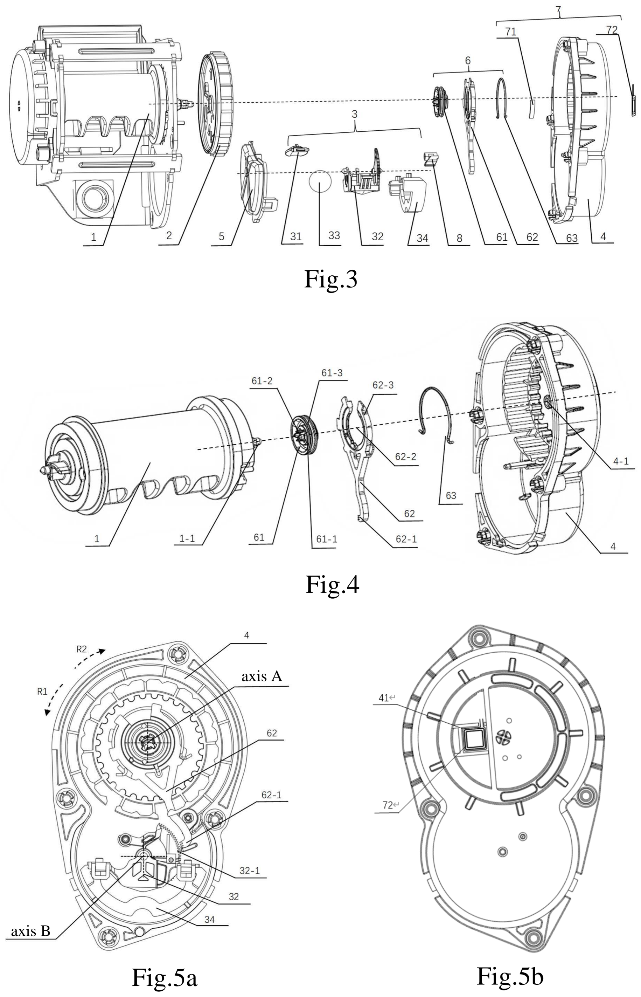

As shown in Fig. 3, the seatbelt retractor further includes a mechanical side cover 4 and a vehicle sensing side cover 5, wherein the vehicle sensing side cover 5 is assembled with the mechanical side cover 4 to fix the adaptive vehicle sensing device 3. In addition, the vehicle sensing adaptive suppression device 6 is assembled on the mechanical side cover 4, especially on the mechanical side cover mounting shaft 4-1. As can also be seen from Fig. 3, the adaptive vehicle sensing device 3 includes a sensing base 32, a sensing pawl 31, an inertial body 33, and an inertial block 34.

The vehicle sensing adaptive suppression device 6 may include a suppression component 62 and an actuating component 61. In the embodiment shown in Figs. 3 and 4, the suppression component 62 is implemented by a swing pawl, and the actuating component 61 is implemented by an eccentric disc. The actuating component 61 can rotate synchronously with the webbing spool 1. A suppression component 62 is arranged on the actuating component 61, and the actuating component 61 can actuate the suppression component 62 to rotate together. To achieve this actuating rotation, a spring 63 is further arranged outside the suppression component 62 to clamp the suppression component 62 on the actuating component 61 and thereby generate adhesive force between the suppression component 62 and the actuating component 61. This adhesive force exists in the form of frictional force. At this time, the vehicle sensing adaptive suppression device 6 is configured as a swing pawl assembly and includes a swing pawl as the suppression component 62, an eccentric disc of the actuating component 61, and a spring 63 for providing adhesive force.

The connection relationship between the suppression component 62, the actuating component 61, and the spring 63 is specifically described below. A feature hole 61-1 is provided inside the actuating component 61 for assembling the suppression component 62 onto the mechanical side cover 4. In addition, the actuating component 61 has actuating component-engaging teeth 61-2 that can mesh with the webbing spool-engaging teeth 1-1 at the head of the webbing spool 1 to realize synchronous rotation of the actuating component 61 and the webbing spool 1. In addition, a circle of smooth first groove 61-3 is provided on the outer side of the actuating component 61, wherein the first groove 61-3 is used to assemble the suppression component 62. The suppression component 62 is provided with a hollow portion 62-2 at the head for assembling the actuating component 61. The head of the suppression component 62 is arranged coaxially with the webbing spool 1. The suppression component 62 has a second groove 62-3 on the outer side of its head for assembling the spring 63. The spring 63 is fixed in the second groove 62-3 at the head of the suppression component 62 by its own spring force, thereby holding the suppression component 62 on the actuating component 61, wherein adhesive force exists between the suppression component 62 and the actuating component 61.

Of course, a case without the spring 63 is also conceivable. In some embodiments, the adhesive force can be achieved by the elastic force of the suppression component 62 itself. For another example, when the actuating component adopts other forms of components, a part of the suppression component 62 can be clamped into a gap structure of the actuating component, and adhesive force can be generated through a clamping action.

In addition, a case without the actuating component 61 is also conceivable. In some embodiments, the suppression component 62 can be directly actuated by the webbing spool 1, and adhesive force exists between the suppression component 62 and the webbing spool 1.

To suppress the adaptive vehicle sensing function of the adaptive vehicle sensing device 3 when needed, the suppression component 62 has a stopping portion 62-1, and the adaptive vehicle sensing device 3 has a corresponding stopping portion 32-1 cooperating with the stopping portion 62-1, wherein the stopping portion 62-1 of the suppression component 62 is an engaging tooth or engaging pawl provided at its tail, and the corresponding stopping portion 32-1 of the adaptive vehicle sensing device 3 is a corresponding engaging tooth of the adaptive vehicle sensing device 3, wherein the corresponding engaging tooth is provided on the sensing base 32. The stopping portion 62-1 can engage with the corresponding stopping portion 32-1 to lock the adaptive vehicle sensing device 3.

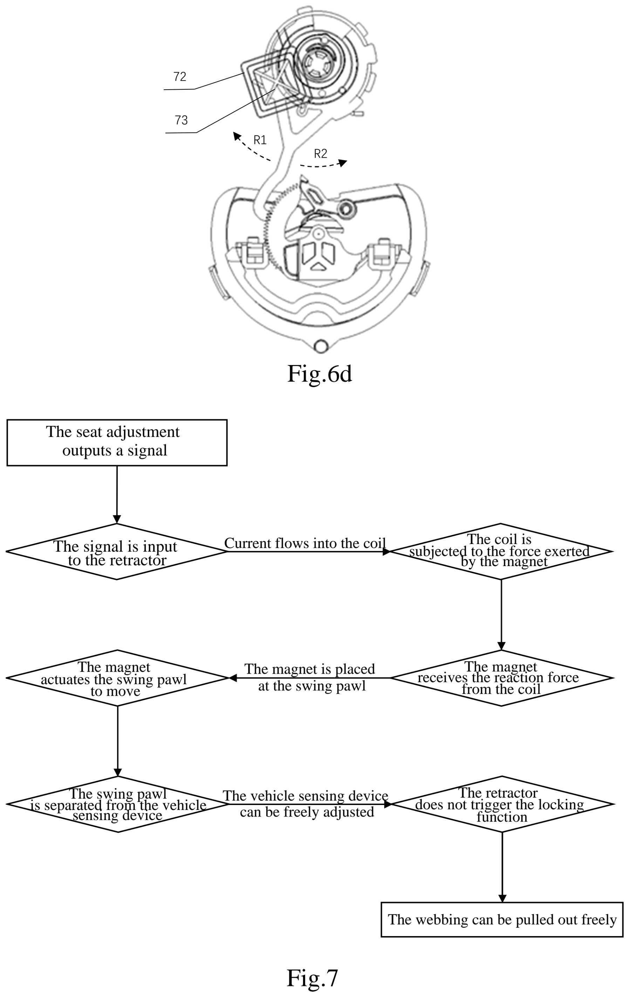

In this embodiment, the webbing spool 1 drives the actuating component 61 and indirectly actuates the suppression component 62 to move via the actuating component 61. Of course, in other embodiments, the webbing spool 1 can also directly actuate the suppression component 62 to move. The suppression component 62 can move between a stopping position and a blocking position, wherein in the stopping position, the stopping portion 62-1 of the suppression component 62 is engaged with the corresponding stopping portion 32-1 of the adaptive vehicle sensing device 3, while in the blocking position, the stopping portion 62-1 of the suppression component 62 is disengaged from the corresponding stopping portion 32-1 of the adaptive vehicle sensing device 3 and the suppression component 62 is blocked. In both indirect actuating and direct actuating cases, when the webbing spool 1 rotates in the winding direction, the suppression component 62 can move in a first direction R1 when it has not entered the blocking position until it reaches the blocking position, and when the webbing spool 1 rotates in the unwinding direction, the suppression component 62 can move in a second direction R2 opposite to the first direction R1 when it has not entered the stopping position until it reaches the stopping position and engages with the adaptive vehicle sensing device 3. Here, the first direction R1 and the second direction R2 shown in Figs. 5a and 6d are merely exemplary. As mentioned above, when the webbing spool 1 indirectly actuates the suppression component 62 to move, a transmission mechanism may exist between the webbing spool 1 and the suppression component 62, and such a transmission mechanism can convert the rotational movement of the webbing spool 1 into a desired form of movement, such as rotational movement, especially swing movement, or linear movement, for example. Therefore, the directions of the first direction R1 and the second direction R2 are not limited to those shown in Figs. 5a and 6d.

Next, the working principle of the engagement control device 7 is described.

The main function of the engagement control device 7 of the present disclosure is to prevent, for example, false locking of the adaptive vehicle sensing device 3 and the resulting false locking of the seatbelt retractor during seat adjustment, and to prevent, for example, random locking or misaligned locking of the adaptive vehicle sensing device 3 when the seat adjustment is completed. To this end, for example, an activation signal is continuously or intermittently sent to the engagement control device 7 during seat adjustment. When the engagement control device 7 receives the activation signal, the engagement control device 7 is activated and applies a driving force to the suppression component 62 of the vehicle sensing adaptive suppression device 6, thereby making the suppression component 62 overcome the adhesive force and move in the first direction R1 when it has not entered the blocking position, or keeping the suppression component 62 in the blocking position when the suppression component 62 is in the blocking position, so as to prevent the stopping portion 62-1 of the suppression component 62 from engaging with the corresponding stopping portion 32-1 of the adaptive vehicle sensing device 3, and thus prevent the adaptive vehicle sensing device 3 from being locked. In addition, for example, a deactivation signal is sent to the engagement control device 7 when the seat adjustment is completed. When the engagement control device 7 receives the deactivation signal, the engagement control device 7 is deactivated and cancels the driving force applied to the suppression component 62 of the adaptive vehicle sensing device 3 to prompt the suppression component 62 to stop moving, wherein the suppression component 62 does not move based on the adhesive force, so that the suppression component 62 does not move in the first direction R1 or toward the adaptive vehicle sensing device 3 when the seat adjustment is completed, which may cause random locking or misaligned locking of the adaptive vehicle sensing device 3.

In this embodiment, the prevention of false locking of the adaptive vehicle sensing device 3 during seat adjustment and the prevention of random locking or misaligned locking of the adaptive vehicle sensing device 3 when the seat adjustment is completed are achieved without affecting the linkage between the webbing spool 1 and the suppression component 62, wherein the adhesive force required by the webbing spool 1 to actuate the suppression component 62 is fully utilized, and the adhesive force is also used to prevent the adaptive vehicle sensing device 3 from resetting when the seat adjustment is completed. Therefore, the engagement control device 7 of the present disclosure can realize the dual use of adhesive force, which is an ingenious design.

However, it should be emphasized here that the means for preventing the movement of the suppression component 62 when the engagement control device 7 is deactivated can also be realized by a holding force in other cases, such as a holding force not provided for actuating by the webbing spool 1, and this holding force can also be an adhesive force. In addition, such means for preventing the movement of the suppression component 62 can also be realized by a form fit. For example, the suppression component 62 enters a form fit state when the engagement control device 7 is activated and remains in the form fit state when the engagement control device 7 is deactivated. To disengage the suppression component 62 from the form fit state, a certain force directed in the second direction R2 needs to be applied to the suppression component 62.

Next, the specific design and working principle of the engagement control device 7 are described with reference to Figs. 3 to 6d. The engagement control device 7 according to the present disclosure is configured as an electromagnetic drive device including a current receiving member for receiving an input current and a magnet 71 for providing a magnetic field. The magnet 71 is arranged on the arc-shaped head of the movable suppression component 62, and the current receiving member is configured as a coil 72 and fixedly arranged on the mechanical side cover 4. In other embodiments, it is also conceivable to arrange the magnet 71 on the mechanical side cover 4 and the coil 72 on the suppression component 62. To obtain the desired driving force, when not energized, the current receiving member and the magnet 71 are arranged relative to each other such that the current receiving member that receives the input current interacts with the magnetic field of the magnet 71 and thereby generates the required driving force, which involves the shape of the current receiving member, the current direction of the input current, and the magnetic poles of the magnet 71, which will be described in detail below.

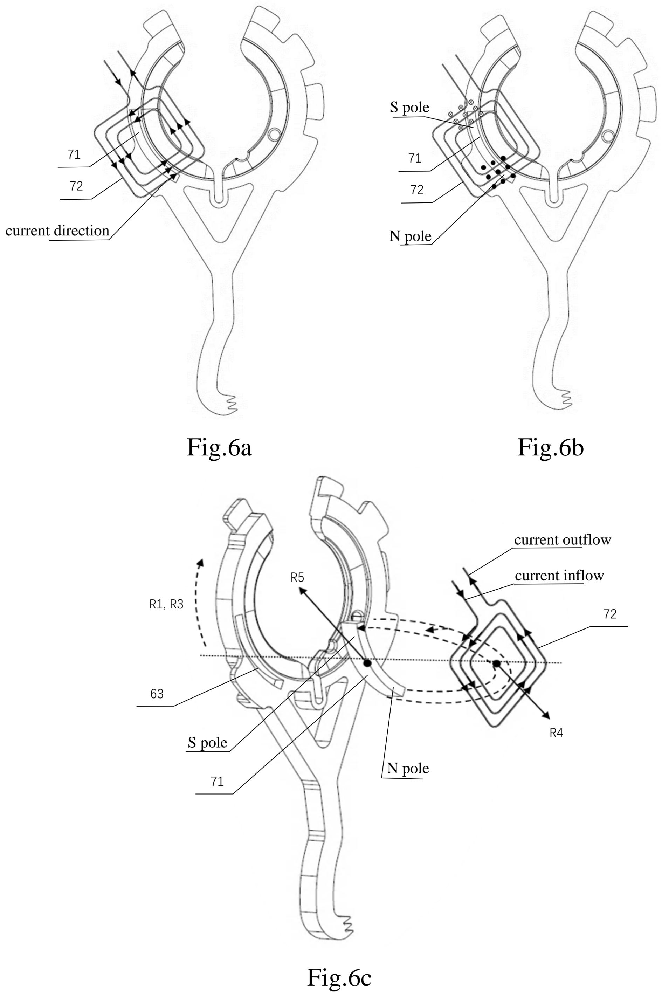

In addition to the configuration of the coil 72, the current receiving member can also be configured in other forms. For example, in one embodiment, the circuit receiving member can be configured as a meandering wire structure, which can have a plurality of wire segments spaced apart from each other by a constant distance. In addition, the circuit receiving member can be a closed structure with at least two wire segments spaced apart from each other by a constant distance, and such a closed structure can have a rectangular, trapezoidal, or fan-shaped shape, for example. In short, the circuit receiving member should be provided with at least two wire segments spaced apart from each other by a constant distance, so that when the circuit receiving member is energized, the two wire segments spaced apart from each other by a constant distance can generate the largest possible Ampere force with limited space and materials. The current receiving member is configured to be flat to realize a space-saving arrangement structure. In this embodiment, the current receiving member is fixedly arranged in the upper region of the outside of the mechanical side cover 4, as shown in Fig. 5b. In other embodiments, the current receiving member can also be fixed on the inner side of the mechanical side cover 4. To fix the current receiving member, as shown in Fig. 5b, a recessed first accommodating portion 41 for arranging the current receiving member configured as, for example, a coil 72 is provided on the mechanical side cover 4. The shape of the first accommodating portion 41 is substantially matched with the shape of the current receiving member. In one embodiment, as can be clearly seen from Figs. 6a to 6c, the current receiving member is configured as a flat coil 72. In addition, the coil 72 has a rectangular, such as square (see Fig. 5b), shape. In addition to the rectangular shape, other shapes of the coil 72, such as trapezoidal or fan-shaped, are also conceivable. As shown in Fig. 6d, a bracket 73 for stretching the coil 72 is provided in the coil 72.

Regarding the structure and arrangement of the magnet 71, as can be clearly seen from Fig. 6c, the magnet 71 is correspondingly configured to be arc-shaped to facilitate the arrangement of the magnet 71 at the arc-shaped head of the suppression component 62. To accommodate the arc-shaped magnet 71, an arc-shaped second accommodating portion 63 is further provided in the arc-shaped head of the suppression component 62. The second accommodating portion 63 is arranged on the side of the arc-shaped head of the suppression component 62 facing the mechanical side cover 4, so the second accommodating portion 63 and the corresponding magnet 71 cannot be seen in Fig. 5a, but the second accommodating portion 63 and the magnet 71 can be seen in Fig. 6c.

The interaction between the current receiving member configured as a coil 72 and the magnet 71 in the electromagnetic drive device is described below with reference to Figs. 6a to 6c.

When the engagement control device 7 receives an activation signal, an input current flows into the coil 72, and the flow direction of the input current can be seen from Figs. 6a and 6c. For this flow direction of the input current, the magnet 71 is arranged on the suppression component 62 configured as a swing pawl and the coil 72 is arranged at the mechanical side cover 4 such that the magnet 71 and the coil 72 have the following relative arrangement structure, wherein in this relative arrangement structure, when the coil 72 is not energized, the coil 72 is arranged directly opposite the magnet 71, and the magnetic induction lines from the N pole of the magnet 71 pass through the lower segment of the coil 72 from below and pass through the upper segment of the coil 72 from above to reach the S pole of the magnet 71, thereby forming the form of interaction between the magnetic induction lines and the coil 72 as shown in Figs. 6b and 6c, wherein the solid circles in Fig. 6b indicate exiting from the drawing plane, and the circles with crosses indicate entering the drawing plane. When the coil 72 is energized, the input current flows in the coil 72 as shown in Figs. 6a and 6c, so that according to the left-hand rule, based on the arrangement structure of the upper segment and the lower segment of the coil 72 being spaced apart from each other by a constant distance, especially parallel to each other, Ampere forces directed downward perpendicular to the upper segment and the lower segment of the coil 72 are generated in both the upper segment and the lower segment of the coil 72, and the resultant force of the Ampere forces is also directed downward. Since the coil 72 is fixedly arranged at the mechanical side cover 4, according to Newton's third law, a reaction force opposite to the Ampere force is correspondingly generated on the magnet 71, and this reaction force can be used as a driving force. This driving force prompts the swing pawl to overcome the adhesive force and move in the first direction R1 when the swing pawl has not entered the blocking position, such as moving in the swing direction R3 of the swing pawl shown in Fig. 6c. The coil force direction R4 and the magnet force direction R5 can also be seen in Fig. 6c.

The workflow of the engagement control device 7 configured as an electromagnetic drive device according to the present disclosure is described below with reference to Fig. 7.

For example, when the seat starts to be adjusted, an activation signal is output, which is then input into the seatbelt retractor and transmitted to the electromagnetic drive device. When the activation signal is received, current flows into the coil 72 of the electromagnetic drive device. The energized coil 72 is acted upon by the magnet 71, and the fixed coil 72 in turn exerts a reaction force on the magnet 71. Since the magnet 71 is arranged at the suppression component 62 configured as a swing pawl, the reaction force acting on the magnet 71 serves as a driving force to actuate the swing pawl to move. When the swing pawl is engaged with the adaptive vehicle sensing device 3, this driving force drives the swing pawl to separate from the adaptive vehicle sensing device 3, so that the adaptive vehicle sensing device 3 can then be freely adjusted. At this time, the seatbelt retractor does not trigger the locking function, so that the webbing can be freely pulled out without being locked and pressing the occupant's chest during seat adjustment. It should be noted here that this is for the case where the swing pawl is in an engaged state with the adaptive vehicle sensing device 3 when the seat starts to be adjusted. In other cases, it may already be in a separated state from the adaptive vehicle sensing device 3 when the seat starts to be adjusted, so that the electromagnetic drive device can keep the swing pawl continuously separated from the adaptive vehicle sensing device 3 during seat adjustment without engaging with the adaptive vehicle sensing device 3.

The working mode of the engagement control device 7 configured as an electromagnetic drive device is described in conjunction with the following scenarios.

Scenario 1: The occupant wears the seatbelt and the seat backrest is adjusted backward.

Before the seat backrest is adjusted, the structure on the locking side of the seatbelt retractor may be as shown in Fig. 5a. When the seat backrest is adjusted backward, the seatbelt retractor receives an activation signal, the electromagnetic drive device is activated, and current is input into the coil 72. Affected by the magnetic field of the magnet 71, the coil 72 generates an Ampere force. According to the left-hand rule, the direction of the resultant Ampere force on the coil 72 is downward, wherein the current direction, magnetic field direction, and Ampere force direction can be referred to Figs. 6a to 6c. Since the coil 72 is fixedly arranged at the mechanical side cover 4, the coil 72 cannot move, which causes the magnet 71 on the suppression component 62 to receive a reaction force as a driving force. Under the action of the driving force, the magnet 71 actuates the suppression component 62 to overcome frictional resistance and move in the first direction R1 around the axis A, that is, counterclockwise in Fig. 5a, so that the stopping portion 62-1 of the suppression component 62 moves away from the corresponding stopping portion 32-1 of the adaptive vehicle sensing device 3 in the first direction R1. In this case, the adaptive vehicle sensing device 3 actuated by its own gravity can still rotate freely around the axis B, and the locking function of the seatbelt retractor is not triggered. The webbing can be freely pulled out without pressing the occupant's chest.

Scenario 2: The occupant wears the seatbelt, and the seat backrest is adjusted backward, and the occupant manually pulls the webbing.

Before the seat backrest is adjusted, the structure on the locking side of the retractor can also be as shown in Fig. 5a. When the seat backrest is adjusted backward and the occupant manually pulls the webbing, on the one hand, the seatbelt retractor receives an activation signal, the electromagnetic drive device is activated, and the energized coil 72 interacts with the magnetic field of the magnet 71 to generate a driving force, so that the stopping portion 62-1 of the suppression component 62 moves away from the corresponding stopping portion 32-1 of the adaptive vehicle sensing device 3 in the first direction R1 (the workflow of the electromagnetic drive mechanism 7 is the same as that in Scenario 1), and on the other hand, the occupant manually pulls out the webbing, the webbing actuates the webbing spool 1 to rotate, the webbing spool 1 actuates the actuating component 61 to rotate, and the actuating component 61 will make the suppression component 62 tend to engage with the adaptive vehicle sensing device 3 under the action of adhesive force. However, since the driving force provided by the electromagnetic drive device is greater than the adhesive force between the suppression component 62 and the actuating component 61, the driving force will overcome the adhesive force to make the suppression component 62 still move in the first direction R1 around the axis A, that is, counterclockwise in Fig. 5a, so that the stopping portion 62-1 of the suppression component 62 also moves away from the corresponding stopping portion 32-1 of the adaptive vehicle sensing device 3 in the first direction R1. In this case, the adaptive vehicle sensing device 3 actuated by its own gravity can still rotate freely around the axis B, and the locking function of the seatbelt retractor is not triggered. The webbing can be freely pulled out without pressing the occupant's chest.

It should be noted that the terms used herein are only for the purpose of describing specific aspects and are not intended to limit the disclosure. As used herein, the singular forms "a" and "the one" shall include the plural forms unless the context clearly indicates otherwise. It is to be understood that the terms "comprises" and/or "comprising" and other similar terms, when used in this application, specify the presence of stated operations, elements, and/or components, but do not exclude the presence or addition of one or more other operations, elements, components, and/or combinations thereof. As used herein, the term "and/or" includes all any combinations of one or more of the associated listed items. In the description of the drawings, like reference numerals always denote like elements.

The thickness of elements in the drawings may be exaggerated for clarity. It is also to be understood that if an element is referred to as being "on", "coupled to", or "connected to" another element, it can be directly formed on, coupled to, or connected to the other element, or one or more intervening elements may be present therebetween. Conversely, if the expressions "directly on", "directly coupled to", and "directly connected to" are used herein, they indicate that there are no intervening elements. Other words used to describe the relationship between elements should be interpreted similarly, such as "between" and "directly between", "attached" and "directly attached", "adjacent" and "directly adjacent", and so on.

Terms such as "top", "bottom", "above", "below", "upper", "lower", etc., are used herein to describe the relationship of one element, layer, or region relative to another element, layer, or region as shown in the drawings. It is to be understood that these terms should also encompass other orientations of the device in addition to the orientation described in the drawings.

It is to be understood that although the terms "first", "second", etc. may be used herein to describe different elements, these elements should not be limited by these terms. These terms are only used to distinguish one element from another. Thus, a first element could be termed a second element without departing from the teachings of the present disclosure.

It is also contemplated that all exemplary embodiments disclosed herein may be arbitrarily combined with each other. In addition, all individual technical features in this application can be arbitrarily combined with each other, provided that the combined technical features are not contradictory to each other. All technically feasible combinations of features are the technical content described in this application.

Finally, it should be noted that the above embodiments are only used to understand the present disclosure and do not limit the protection scope of the present disclosure. For those skilled in the art, modifications can be made on the basis of the above embodiments, and these modifications do not depart from the protection scope of the present disclosure.

## Claims

1. A seatbelt retractor for installation in a seat, the seatbelt retractor comprising an adaptive vehicle sensing device actuated by its own gravity and a vehicle sensing adaptive suppression device for suppressing the adaptive vehicle sensing device, wherein the vehicle sensing adaptive suppression device includes a suppression component having a stopping portion, and the adaptive vehicle sensing device has a corresponding stopping portion cooperating with the stopping portion, the stopping portion being capable of being combined with the corresponding stopping portion to lock the adaptive vehicle sensing device, **characterized in that**
the seatbelt retractor further includes an engagement control device for controlling the engagement state between the vehicle sensing adaptive suppression device and the adaptive vehicle sensing device,
wherein when the engagement control device receives an activation signal, the engagement control device is activated and applies a driving force to the suppression component of the vehicle sensing adaptive suppression device to prevent the stopping portion of the suppression component from engaging with the corresponding stopping portion of the adaptive vehicle sensing device, thereby preventing the adaptive vehicle sensing device from being locked;
wherein when the engagement control device receives a deactivation signal, the engagement control device is deactivated and cancels the driving force applied to the suppression component of the adaptive vehicle sensing device to prompt the suppression component not to move.

2. The seatbelt retractor according to claim 1, **characterized in that**
the seatbelt retractor includes a webbing spool,
the webbing spool being capable of directly or indirectly actuating the suppression component to move,
the suppression component being capable of moving between a stopping position and a blocking position, in the stopping position, the stopping portion of the suppression component being engaged with the corresponding stopping portion of the adaptive vehicle sensing device, while in the blocking position, the stopping portion of the suppression component being disengaged from the corresponding stopping portion of the adaptive vehicle sensing device and the suppression component being blocked,
the suppression component being kinematically coupled with the webbing spool such that when the webbing spool rotates in the winding direction, the suppression component can move in a first direction when it has not entered the blocking position, and when the webbing spool rotates in the unwinding direction, the suppression component can move in a second direction opposite to the first direction when it has not entered the stopping position,
wherein the engagement control device is configured to, when receiving the activation signal, move the suppression component in the first direction when the suppression component has not entered the blocking position, or keep the suppression component in the blocking position when the suppression component is in the blocking position.

3. The seatbelt retractor according to claim 2, **characterized in that** the suppression component can be actuated by the webbing spool via adhesive force, wherein the engagement control device is configured such that the engagement control device applies a driving force to the suppression component, which enables the suppression component to overcome the adhesive force and move in the first direction when the suppression component has not entered the blocking position,
preferably, wherein when the engagement control device is deactivated upon receiving the deactivation signal, the suppression component does not move based on the adhesive force.

4. The seatbelt retractor according to claim 3, **characterized in that** the engagement control device includes a driving member and a driven member, the driving member being capable of driving the driven member to perform relative movement,
wherein the driving member is fixedly connected to the suppression component and the driven member is fixedly connected to a fixed and immovable stationary part of the seatbelt retractor, or the driving member is fixedly connected to a fixed and immovable stationary part of the seatbelt retractor and the driven member is fixedly connected to the suppression component.

5. The seatbelt retractor according to claim 4, **characterized in that** the engagement control device is configured as an electromagnetic drive device including a current receiving member as a driving member and a magnet as a driven member, the current receiving member being used to receive an input current, the magnet being used to provide a magnetic field, wherein the current receiving member and the magnet are arranged relative to each other such that the current receiving member that receives the input current interacts with the magnetic field of the magnet, thereby generating the required driving force,
preferably, wherein the shape of the current receiving member, the current direction of the input current, and the magnetic poles of the magnet are configured to generate the required driving force,
preferably, wherein a recessed first accommodating portion for arranging the current receiving member is provided in the fixed and immovable stationary part of the seatbelt retractor, wherein the current receiving member is arranged in the first accommodating portion; wherein the shape of the first accommodating portion is designed such that the current receiving member can be arranged in the first accommodating portion in a shape-matching manner,
preferably, wherein the current receiving member is configured to be flat.

6. The seatbelt retractor according to claim 5, **characterized in that** the current receiving member is provided with at least two wire segments spaced apart from each other by a constant distance, the at least two wire segments spaced apart from each other by a constant distance being arranged relative to the magnet when not energized such that the magnetic induction lines of the magnet pass through a first wire segment of the wire segments in a first magnetic induction line direction and pass through a second wire segment parallel to and opposite to the first wire segment in a second magnetic induction line direction opposite to the first magnetic induction line direction, so that the first wire segment and the second wire segment of the coil respectively generate Ampere forces directed in the same direction when energized, and the resultant force of the corresponding Ampere forces can form the corresponding required driving force according to the fixed position of the coil.

7. The seatbelt retractor according to claim 6, **characterized in that** the at least two wire segments spaced apart from each other by a constant distance are configured to be linear or arc-shaped.

8. The seatbelt retractor according to claim 5, **characterized in that** the current receiving member is configured as a coil.

9. The seatbelt retractor according to claim 8, **characterized in that** a bracket is provided in the coil, the bracket being configured to stretch the coil to obtain the desired coil shape.

10. The seatbelt retractor according to claim 8, **characterized in that** the shape of the coil is rectangular, trapezoidal, or fan-shaped.

11. The seatbelt retractor according to claim 4, **characterized in that** the fixed and immovable stationary part of the seatbelt retractor is configured as a mechanical side cover.

12. The seatbelt retractor according to claim 5, **characterized in that** the suppression component is provided with an arc-shaped head arranged coaxially with the webbing spool, the magnet being arranged at the arc-shaped head, wherein the magnet is configured to be arc-shaped.

13. The seatbelt retractor according to claim 12, **characterized in that** an arc-shaped second accommodating portion for accommodating the arc-shaped magnet is provided in the arc-shaped head of the suppression component, wherein the second accommodating portion is provided on the side of the arc-shaped head facing the stationary part.

14. The seatbelt retractor according to any one of claims 1 to 13, **characterized in that** the engagement control device is configured to receive the activation signal when the seat is adjusted and the deactivation signal when the seat adjustment is completed.

15. A seatbelt assembly, **characterized in that** the seatbelt assembly includes a webbing and the seatbelt retractor according to any one of claims 1 to 14, the webbing being capable of being retracted onto the webbing spool of the seatbelt retractor.
